(19) Europäisches Patentamt
European Patent Office
Office européen des brevets

(11) Publication number: 0 031 650 B1

# (12) EUROPEAN PATENT SPECIFICATION

(45) Date of publication of patent specification: 03.10.84

(51) Int. Cl.[3]: C 08 G 18/80, C 08 G 18/76, C 07 C 127/24

(21) Application number: 80304261.3

(22) Date of filing: 27.11.80

## (54) Process for preparing liquid polyisocyanate compositions, and their use.

(30) Priority: 14.12.79 GB 7943096

(43) Date of publication of application: 08.07.81 Bulletin 81/27

(45) Publication of the grant of the patent: 03.10.84 Bulletin 84/40

(84) Designated Contracting States: BE DE FR GB IT NL

(56) References cited:
EP-A-0 019 375
DE-A-2 425 657
DE-A-2 513 793
DE-A-2 708 820
FR-A-2 241 597
GB-A- 994 890
GB-A-1 377 676
GB-A-1 514 445

(73) Proprietor: IMPERIAL CHEMICAL INDUSTRIES PLC
Imperial Chemical House Millbank
London SW1P 3JF (GB)

(72) Inventor: Hughes, Jeffrey
57 Normanby Road
Worsley Manchester (GB)
Inventor: Keane, Kevin Edward
88 Kirkway Alkrington
Middleton Manchester (GB)

(74) Representative: Ricks, Michael James et al
Imperial Chemical Industries PLC Legal Department: Patents PO Box 6
Welwyn Garden City Herts, AL7 1HD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 031 650 B1

## Description

This invention relates to liquid polyisocyanate compositions and in particular to compositions containing diphenylmethane diisocyanate and to the use of such compositions in the manufacture of polyurethanes.

It is well known to manufacture polyurethanes, of a cellular or non-cellular nature, by reacting an organic polyisocyanate with an organic polyol in the presence of additives of various kinds. Many organic polyisocyanates have been proposed for use in making polyurethanes but, since many polyurethane manufacturing processes involve the rapid mixing of materials at room temperature, it is preferred to use polyisocyanates that are liquid at room temperature and that remain in the liquid state without significant deposition of solid materials even when stored at relatively low temperatures such as may be encountered in winter.

One of the polyisocyanates which has been used commercially in the manufacture of polyurethanes is diphenylmethane diisocyanate which is generally available either in a substantially pure form or in admixture with related polymethylene polyphenyl polyisocyanates of higher functionality such as may be represented by the general formula:

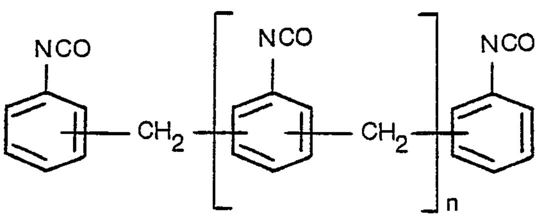

wherein n has an average value of one or more. The latter mixtures are commonly referred to in the trade as "crude MDI" and are made by the phosgenation of a mixture of polyamines obtained by the acid condensation of aniline and formaldehyde.

The manufacture of both the polyamide mixtures and the polyisocyanate mixtures is well known. The condensation of aniline with formaldehyde in the presence of strong acids such as hydrochloric acid gives a reaction product containing diaminodiphenylmethane together with polymethylene polyphenyl polyamines of higher functionality, the precise composition depending in known manner on the aniline/formaldehyde ratio. The polyisocyanates are made by phosgenation of the polyamine mixtures and the various proportions of diamines, triamines and higher polyamines give rise to related proportions of diisocyanates, triisocyanates and higher polyisocyanates.

The diisocyanates can be isolated from this mixture by distillation, being recovered as an isomer mixture in which the predominant component is 4,4′-diphenylmethane diisocyanate, there being smaller amounts of the 2,4′-and 2,2′-isomers. A substantially pure form of the 4,4′-isomer can be recovered from this isomer mixture by crystallisation leaving a mother liquor which can vary in composition depending upon the operating conditions but which typically might contain about 80% of the 4,4′-isomer and about 20% of the 2,4′-isomer with traces of the 2,2′-isomer.

The present invention is particularly concerned with diphenylmethane diisocyanate containing at least 15% by weight, based on the total diisocyanate, of the 2,4′-isomer. Both the 4,4′- and 2,4′-isomers are solids at room temperature, having melting points of 42°C and 36°C respectively and many of the isomer mixtures are solid at room temperature or under the lower temperatures which can obtain during winter storage or transportation. For polyurethane manufacture, it is necessary to melt any solid material and maintain it in a molten condition.

GB—A—1 514 445 (equivalent to DE—A1—2 708 820) discloses a thermoplastic polyurethane elastomer wherein the isocyanate reactant is a liquid reaction product of 4,4′-diphenylmethane diisocyanate and 0.0005—0.05 equivalents, per equivalent of isocyanate, of a $C_{1-18}$ aliphatic monohydric alcohol, including the monobutylether of diethylene glycol.

The present invention provides liquid polyisocyanate compositions which are stable to storage at low temperatures and which provide polyurethanes having excellent properties.

Thus, according to the invention, there is provided a method for the preparation of a liquid polyisocyanate composition which comprises reacting one molar proportion of diphenylmethane diisocyanate containing at least 15% by weight of the 2,4′-isomer with from 0.01 to 0.8 molar proportions of a monohydric alcohol of the formula:

$$A{-}OH$$

wherein A represents an alkyl radical containing from 9 to 16 carbon atoms or a radical of the formula:

$$R{-}(OCH_2\underset{\displaystyle R^1}{\underset{|}{C}}H)_x{-}$$

wherein R represents an alkyl group containing from 1 to 12 carbon atoms, $R^1$ represents hydrogen or an alkyl group containing from 1 to 3 carbon atoms and x is an integer of from 1 to 58, the reaction being performed at a temperature of from 100 to 250°C and in the presence of a catalyst for the NCO/OH reaction whereby the urethane formed by the reaction of the monohydric alcohol with the diisocyanate reacts with further diisocyanate to form a major proportion of allophanate.

Preferably, the diphenylmethane diisocyanate used as starting material contains the

4,4′ isomer in addition to containing at least 15% by weight of the 2,4′-isomer.

When the monohydric alcohol is one in which A is an alkyl radical having 9 to 16 carbon atoms, it may be linear or branched but the latter is preferred. Alcohols having from 10 to 14 carbon atoms are especially suitable. A mixture of alcohols may be employed and in fact many of the alcohols are most readily available as isomer mixtures.

When the monohydric alcohol is a monoalkoxy glycol, R is preferably an alkyl group containing from 1 to 5 carbon atoms, for example methyl or ethyl. $R^1$ is preferably hydrogen or methyl, the material then being a monoalkoxy (poly)ethylene or (poly)propylene glycol. The formula includes copolymeric monoalkoxy polyalkylene glycols, for example copolymers derived from ethylene and propylene oxides. The integer n is preferably less than 44. Mixtures of monoalkoxy glycols may be used.

Under the conditions specified for the performance of the method of the invention, the urethane formed by the reaction of the monohydric alcohol with the diphenylmethane diisocyanate reacts with further isocyanate to form an allophanate. It will be appreciated, however, that the reaction product may contain a minor proportion of material that has not reacted beyond the urethane stage as well as higher functionality material where the reaction has gone beyond the allophanate stage.

Particulary useful products are obtained when one molar proportion of the diphenylmethane diisocyanate is reacted with from 0.1 to 0.3 molar proportions of the monohydric alcohol.

The reaction between the diphenylmethane diisocyanate and the monohydric alcohol is preferably performed at a temperature in the range 100 to 200°C and is continued until a product of the desired constitution is obtained. The reaction catalyst may be any catalyst known for the reaction between isocyanate and hydroxyl groups. Particularly suitable catalysts are tin and dialkyl tin salts of carboxylic acids, for example stannous octoate and dibutyl tin dilaurate. Other suitable catalysts are tertiary amines in which the nitrogen atom is not directly attached to an aromatic residue, for example 1,4-diazabicyclo[2.2.2]octane. The monohydric alcohol is conveniently added slowly to the polyisocyanate and catalyst at the reaction temperature, but the reactants may alternatively be brought together at ambient temperature or at an intermediate temperature and then heated to the reaction temperature. After the reaction is complete, it is preferable to deactivate the catalyst either chemically, for example by incorporating an acidic substance, or physically, for example by adsorption on to activated carbon. It is also possible in some cases to remove the catalyst by filtration or distillation.

The polyisocyanate compositions of the present invention are liquid compositions which are stable to storage, that is to say the compositions remain liquid at room temperature for long periods of time, sufficient in fact for all practical purposes, and can be transported or stored at low temperature without significant sedimentation of crystals of diphenylmethane diisocyanate. The compositions are suitable for use in the manufacture of polyurethanes using techniques fully described in the prior art. Being substantially difunctional, the compositions are particularly suitable for the manufacture of polyurethane elastomers and flexible foams including microcellular elastomers. The flexible foams obtained have improved tensile properties and improved curing properties compared with foams obtained from corresponding diphenylmethane diisocyanates which have not been modified be reaction with a monohydric alcohol.

The invention illustrated by the following Examples in which all parts and percentages are by weight.

Example 1

To 4000 parts of an isomeric mixture of diphenylmethane diisocyanates, containing approximately 80% 4,4′-, 20% 2,4′-, and 1% 2,2′-isomers, were added 9.6 parts of dibutyl tin dilaurate. The mixture was heated to 120°C, stirring under a blanket of nitrogen, and 653 parts of monomethoxy polyethylene glycol of molecular weight 213 were added slowly maintaining the temperature at 120°C. The reaction mixture was heated for a further 2 hours at 120°C and was then cooled to ambient temperature. 2.4 parts of salicyclic acid were added during the cooling period. The product, a stable, brown, low viscosity liquid had an isocyanate value of 23.9%, and remained liquid for up to one month at 0°C.

The product was blended with starting material to yield an isocyanate value of 30% and a flexible foam moulding prepared using the following formulation and the conventional moulding methods of the art.

| | Parts by weight |
|---|---|
| Oxypropylated glycerol, 15% ethylene oxide tip 5250 molecular weight | 100 |
| Water | 2.6 |
| DABCO 33LV (trademark of Air Products & Chem.) | 0.8 |
| NIAX Catalyst A1 (trademark of Union Carbide) | 0.2 |
| Silicone B4113 (Union Carbide) | 1.0 |
| Refrigerant 11 | 10.0 |
| Crude MDI | 14.0 |
| Blended product as above (30% NCO value) | 37.8 |

The foam moulding had the following physical properties.

| | |
|---|---|
| Density | 44 kg.$m^{-3}$ |
| Tensile strength | 135 $KNm^{-2}$ |
| Elongation | 150% |
| Tear strength | 315 $Nm^{-1}$ |
| Indentation Hardness 25% | 74 N 200 $mm^{-1}$ |
| 40% | 119 N 200 $mm^{-1}$ |
| 65% | 252 N 200 $mm^{-1}$ |
| Resilience | 40% |

The crude MDI used in the formulation had an NCO value of 30% and contained approximately 50% of diphenylmethane diisocyanates, the remainder being polymethylene polyphenyl polyisocyanates of higher functionality.

Example 2

To 1000 parts of the isomeric mixture of diphenylmethane diisocyanates used in Example 1 were added 2.4 parts of dibutyl tin dilaurate. The mixture was heated to 120°C, stirring under nitrogen and 160 parts of tridecanol (a $C_{13}$ hydrocarbon based alcohol) were added slowly maintaining the temperature of 120°C. The reaction mixture was then heated to 200°C and held at that temperature for 2 hours; 0.52 parts of salicyclic acid were added and the reaction mixture was crash cooled to ambient temperature. The product was a red/brown low viscosity liquid of NCO value 22.5%, which remained liquid for several weeks at 0°C.

Example 3

To 500 parts of the isomeric mixture of diphenylmethane diisocyanates used in Example 1 was added 1 part dibutyl tin dilaurate. The mixture was heated with stirring under dry nitrogen to 120°C at which point 40 parts of methyl Cellosolve* were added slowly, maintaining the temperature at 120°C. The mixture was heated for a further 2 hours at 120°C, when 0.24 parts of salicylic acid were added, and then crash cooled. The product obtained was a yellow/brown liquid with an NCO value of 23.0%. The product was blended with a proportion of the starting isocyanate to yield an isocyanate value of 30% and a flexible foam moulding was prepared using the conventional methods known in the art and the following formulation:

*Cellosolve is a trademark

| | Parts by weight |
|---|---|
| Oxypropylated glycerol with 15% ethylene oxide tip 5250 molecular weight | 100 |
| Water | 2.6 |
| DABCO 33LV | 0.8 |
| NIAX catalyst A1 | 0.2 |
| Silicone B4113 | 1.0 |
| Refrigerant 11 | 10.0 |
| Crude MDI | 14.0 |
| Isocyanate product (NCO value 30%) | 37.8 |

The foam moulding had the following physical properties.

| | |
|---|---|
| Density | 42.kg $m^{-3}$ |
| Tensile strength | 120 kN $m^{-2}$ |
| Elongation | 155% |
| Tear strength | 354 $Nm^{-1}$ |
| Indentation hardness 25% | 55 N 200 $mm^{-1}$ |
| 40% | 97 N 200 $mm^{-1}$ |
| 65% | 261 N 200 $mm^{-1}$ |
| Resilience | 38% |

Example 4

1000 parts of 2,4'-diisocyanato diphenylmethane were heated with stirring under a blanket of dry nitrogen to 80°C and 4 parts of dibutyl tin dilaurate were added. The temperature was increased to 120°C and 80 parts of methyl Cellosolve* were added slowly. The mixture was heated at 120°C for a further $4\frac{1}{2}$ hours and allowed to cool with the addition of 1 part salicyclic acid at a teperature of approximately 80°C. The product was a clear brown liquid with an isocyanate value of 23.6%. The product remained liquid after several weeks storage at 0°C.

Example 5

To 4000 parts of an isomeric mixture of diphenylmethane diisocyanate, containing approximately 18% 2,4'-, 82% 4,4'- and 1% 2,2'-isomers, were added 9.6 parts of dibutyl tin dilaurate. The mixture was heated to 120°C

*Cellosolve is a trademark.

under dry nitrogen with stirring and 960 parts of monomethoxy polypropylene glycol of molecular weight 406 were added slowly, maintaining the temperature at 120°C. The reaction mixture was heated for a further 2 hours at 120°C and allowed to cool to ambient temperature with the addition of 2.4 parts of salicyclic acid at approximately 80°C. The product was a red/brown clear liquid of low viscosity with an isocyanate value of 23.3% and excellent low temperature stability. The product was blended with starting material to yield a final isocyanate value of 27.7% and a flexible foam moulding was prepared using the following formulation.

| | Parts by weight |
|---|---|
| Oxypropylated glycerol 15% ethylene oxide tip, 5250 molecular weight | 100 |
| Water | 2.6 |
| Dabco 33LV | 0.8 |
| Niax catalyst A1 | 0.2 |
| Silicone B4113 | 1.0 |
| Refrigerant 11 | 10.0 |
| Crude MDI | 14.9 |
| Isocyanate blend (NCO value 27.7%) | 40 |

The physical properties of the moulding were as follows:

| | |
|---|---|
| Density | 44 kg $m^{-3}$ |
| Tensile strength | 110 KN $m^{-2}$ |
| Elongation | 150% |
| Tear strength | 150 N $m^{-1}$ |
| Indentation hardness 25% | 66 N 200 $mm^{-1}$ |
| 40% | 105 N 200 $mm^{-1}$ |
| 65% | 294 N 200 $mm^{-1}$ |
| Resilience | 37% |

## Claims

1. A method for the preparation of a liquid polyisocyanate composition which comprises reacting one molar proportion of diphenylmethane diisocyanate containing at least 15% by weight of the 2,4'-isomer with from 0.01 to 0.8 molar proportions of a monohydric alcohol of the formula:

$$A—OH$$

wherein A represents an alkyl radical containing from 9 to 16 carbon atoms or a radical of the formula:

$$R—(OCH_2\underset{\displaystyle |\atop \displaystyle R^1}{CH})_x—$$

wherein R represents an alkyl group containing from 1 to 12 carbon atoms, $R^1$ represents hydrogen or an alkyl group containing from 1 to 3 carbon atoms and x is an integer of from 1 to 58, the reaction being performed at a temperature of from 100 to 250°C and in the presence of a catalyst for the NCO/OH reaction whereby the urethane formed by reaction of the monohydric alcohol with the diisocyanate reacts with further diisocyanate to form a major proportion of allophanate.

2. A method according to claim 1 wherein A is an alkyl radical containing from 10 to 14 carbon atoms.

3. A method according to claim 1 wherein R is an alkyl group containing from 1 to 5 carbon atoms.

4. A method according to claim 1 or claim 3 wherein $R^1$ is hydrogen or methyl.

5. A method according to any one of the preceding claims wherein the diphenylmethane diisocyanate is reacted with from 0.1 to 0.3 molar proportions of the monohydric alcohol.

6. The use in the manufacture of polyurethanes of a liquid diphenylmethane diisocyanate prepared according to any one of the preceding claims.

## Revendications

1. Procédé de préparation d'une composition liquide de polyisocyanate, qui comprend la réaction d'une proportion molaire de diisocyanatodiphènylméthane contenant au moins 15% en poids de l'isomère 2,4' avec 0,01 à 0,8 proportion molaire d'un alcool monohydroxylé de formule:

$$A—OH$$

où A représente un radical alcoyle comptant 9 à 16 atomes de carbone ou un radical de formule:

$$R—(OCH_2\underset{\displaystyle |\atop \displaystyle R^1}{CH})_x—$$

où R représente un radical alcoyle comptant 1 à 12 atomes de carbone, $R^1$ représente un atome d'hydrogène ou radical alcoyle comptant 1 à 3 atomes de carbone et x représente un nombre entier de 1 à 58, la réaction étant effectuée à

une température de 100 à 250°C et en présence d'un catalyseur pour la réaction NCO/OH de sorte que l'uréthanne formé par la réaction de l'alcool monohydroxylé avec le diisocyanate réagit avec une nouvelle quantité de diisocyanate pour former une proportion majeure d'allophanate.

2. Procédé suivant la revendication 1, dans lequel A représente un radical alcoyle comptant 10 à 14 atomes de carbone.

3. Procédé suivant la revendication 1, dans lequel R représente un radical alcoyle comptant 1 à 5 atomes de carbone.

4. Procédé suivant la revendication 1 ou 3, dans lequel $R^1$ représente un atome d'hydrogène ou radical méthyle.

5. Procédé suivant l'une quelconque des revendications précédentes, dans lequel le diisocyanatodiphénylméthane est mis à réagir avec 0,1 à 0,3 proportion molaire de l'alcool monohydroxylé.

6. Utilisation d'un diisocyanatodiphénylméthane liquide préparé suivant l'une quelconque des revendications précédentes dans la fabrication de polyuréthannes.

**Patentansprüche**

1. Verfahren zur Herstellung einer flüssigen Polyisocyanatzusammensetzung, bei welchem ein molarer Anteil Diphenylmethandiisocyanat, das mindestens 15 Gew.-% des 2,4'-Isomers enthält, mit 0,01 bis 0,8 molaren Anteilen eines einwertigen Alkohols der Formel:

$$A{-}OH$$

umgesetzt wird, worin A für ein Alkylradikal mit 9 bis 16 Kohlenstoffatomen oder ein Radikal der Formel:

$$R{-}(OCH_2\underset{\displaystyle R^1}{\underset{|}{CH}})_x{-}$$

steht, worin R eine Alkylgruppe mit 1 bis 12 Kohlenstoffatomen bedeutet, $R^1$ Wasserstoff oder eine Alkylgruppe mit 1 bis 3 Kohlenstoffatomen bedeutet und x eine Ganzzahl von 1 bis 58 bedeutet, wobei die Reaktion bei einer Temperatur von 100 bis 250°C und in Gegenwart eines Katalysators für die NCO/OH-Reaktion ausgeführt wird, wodurch das durch die Reaktion des einwertigen Alkohols mit dem Diisocyanat gebildete Urethan mit weiterem Diisocyanat reagiert, so daß ein überwiegender Anteil Allophanat gebildet wird.

2. Verfahren nach Anspruch 1, bei welchem A für ein Alkylradikal mit 10 bis 14 Kohlenstoffatomen steht.

3. Verfahren nach Anspruch 1, bei welchem R für eine Alkylgruppe mit 1 bis 5 Kohlenstoffatomen steht.

4. Verfahren nach Anspruch 1 oder 3, bei welchem $R^1$ für Wasserstoff oder Methyl steht.

5. Verfahren nach einem der vorhergehenden Ansprüche, bei welchem das Diphenylmethandiisocyanat mit 0,1 bis 0,3 molaren Anteilen des einwertigen Alkohols umgesetzt wird.

6. Die Verwendung eines flüssigen Diphenylmethandiisocyanats, welches nach einem der vorhergehenden Ansprüche hergestellt worden ist, bei der Herstellung von Polyurethanen.